# EUROPEAN PATENT APPLICATION

(11) **EP 2 395 036 A1**
(43) Date of publication of application: **14.12.2011**
(21) Application number: 10162950.9
(22) Date of filing: 17.05.2010
(51) Int. Cl.: C08G 18/08, C08G 18/12, C08G 18/48, C08K 5/09, C08K 5/17, C09J 175/08

(54) **Polyurethane dispersions with an acid-base mixture as an additive**

(71) Applicant: Bayer MaterialScience AG, 51368 Leverkusen (DE)
(72) Inventor: The designation of the inventor has not yet been filed

(57) **Abstract**

The invention relates to aqueous polyurethane and polyurethane-polyurea dispersions with an acid-base mixture as an additive, a process for the preparation thereof, and the use thereof.

## Description

The invention relates to aqueous polyurethane and polyurethane-polyurea dispersions with an acid-base mixture as an additive, a process for the preparation thereof, and the use thereof.

Aqueous polyurethane and polyurethane-polyurea dispersions are known and are suitable for use as for paints, sealants and adhesives, for example. Polyurethanes and polyurethane-ureas based on polyether polyols, in particular based on polypropylene oxide diols, have proved themselves in many fields of use. They are employed, inter alia, in the coating of textiles, the coating of leather, as a composite film adhesive and as an adhesive generally. Thus, for example, anionically modified polyurethane-ureas for coating leather are disclosed in EP-B 0581159.

However, aqueous polyurethane and polyurethane-polyurea dispersions based on polyether polyols often have the disadvantage that after prior storage at low temperatures of between 0 °C and 10 °C, their viscosity at room temperature increases drastically compared with the starting viscosity (likewise at room temperature). Since the flow properties and the processing parameters thereby change to the extent that the dispersions may become unusable, these dispersions must always be stored and transported at temperatures of > 10 °C, which involves great expense and thus considerable costs.

One way round this could be the use of polyurethane dispersions with very low contents of urea groups, such as are described, for example, in EP-B 0615988. Due to the low content of urea groups, however, these products exhibit inadequate resistance properties in many fields of use.

Another way round the problem could be the use of dilute polyurethane dispersions or dispersions with very low polymer contents. However, this leads inter alia to higher transport costs and longer drying times with an increased consumption of energy and is therefore not very appropriate for economic reasons.

The object of the present invention was therefore to provide aqueous polyurethane or polyurethane-polyurea dispersions which are based on polyether and which exhibit flow properties which are suitable for further processing even after temporary storage at temperatures in the range from 0 °C to 10 °C for a period of 24 hours.

It has now been found, surprisingly, that the aqueous, anionically hydrophilized polyurethane and polyurethane-urea dispersions described below, which are based on polyether and have an acid-base mixture as an additive, exhibit little or no increase in viscosity at room temperature after prior storage at low temperatures at temperatures of between 0 °C and 10 °C, and therefore permanently exhibit flow properties which are suitable for further processing.

The use of acids and bases as polymer units in polyurethane and polyurethane-urea dispersions is known. Thus, for example, hydroxycarboxylic acids, such as dimethylolpropionic acid, or aminocarboxylic acids, such as glycine or alanine, as ionogenic components, are incorporated into the polymer matrix as hydrophilizing agents. If these are employed in the form of non-neutralized carboxylic acids, they are often converted into the ionic form by bases, for example by tertiary amines, such as triethylamine or triethanolamine, ammonia or alkali hydroxides, carbonates or hydrogen carbonates.

The addition of an acid-base mixture as an additive to aqueous, anionically hydrophilized polyurethane or polyurethane-polyurea dispersions based on polyether polyols to reduce the increase in viscosity due to storage at temperatures in the range from 0 °C to 10 °C has not been disclosed.

At relatively low concentrations of the acid-base mixture added, the polyurethane and polyurethane-urea dispersions according to the invention already exhibit a significantly lower increase in viscosity, and therefore have flow properties which are suitable for further processing, after prior storage at 6 °C.

The present invention provides aqueous compositions comprising
(a) at least one anionically hydrophilized polyurethane or polyurethane-polyurea polymer based on polyether polyols,
(b) at least one mixture of an organic acid and an aminic base as an additive, characterized in that the molar ratio of the amounts of organic acid : aminic base is between 9 : 1 and 1 : 9,
(c) water and
(d) optionally further additives and auxiliary substances.

Preferably, the amount of (a) is from 20 to 60 parts by weight, the amount of (b) is from 0.001 to 20 parts by weight, the amount of (c) is from 30 to 75 parts by weight and the amount of (d) is from 0 to 40 parts by weight, with the proviso that the sum of the parts by weight of the individual components (a) to (d) is 100.

Particularly preferably, the amount of (a) is from 30 to 50 parts by weight, the amount of (b) is from 0.001 to 5 parts by weight, the amount of (c) is from 45 to 65 parts by weight and the amount of (d) is from 0 to 30 parts by weight, with the proviso that the sum of the parts by weight of the individual components (a) to (d) is 100.

Very particularly preferably, the amount of (a) is from 30 to 50 parts by weight, the amount of (b) is from 0.01 to 3 parts by weight, the amount of (c) is from 45 to 65 parts by weight and the amount of (d) is from 0 to 30 parts by weight, with the proviso that the sum of the parts by weight of the individual components (a) to (d) is 100.

Still more preferably, the amount of (a) is from 30 to 50 parts by weight, the amount of (b) is from 0.03 to 1 part by weight, the amount of (c) is from 45 to 65 parts by weight and the amount of (d) is from 0 to 30 parts by weight, with the proviso that the sum of the parts by weight of the individual components (a) to (d) is 100.

The molar ratio of the amounts of organic acid : aminic base is preferably between 3 : 1 and 1 : 3, particularly preferably between 3 : 2 and 2 : 3. In a very particularly preferred embodiment, the molar ratio of the amounts of acid : base is 1 : 1, i.e. the acid and base are employed in equimolar amounts.

The anionically hydrophilized polyurethane or polyurethane-polyurea polymers (a) based on polyether polyols comprise as builder components
(A) at least one polyether polyol
(B) at least one di- and/or polyisocyanate component
(C) at least one component which contains sulphonate and/or carboxylate groups and which furthermore has two or three isocyanate-reactive hydroxyl and/or amino groups and thus leads to lateral sulphonate or, respectively, carboxylate structural units,
(D) optionally mono-, di- and/or triamino-functional compounds and
(E) optionally other isocyanate-reactive compounds.

The polyether polyols (A) which are employed are the polyaddition products of ethylene oxide, propylene oxide, butylene oxide and mixed and grafting polyaddition products thereof and the polyethers obtained by condensation of polyhydric alcohols or mixtures thereof and by the alkoxylation of water, polyfunctional alcohols, amines or amino alcohols. Homo-and/or mixed-polyaddition compounds of ethylene oxide and/or propylene oxide having a number-average molecular weight of from 400 to 4,000 Da, particularly preferably from 500 to 3,000 Da, very particularly preferably from 1,000 to 2,500 Da are preferred. The average functionality of the polyether polyols is greater than 1.85, preferably from 1.92 to 3. Difunctional polyethers with a functionality of from 1.95 to 2.05 are particularly preferred.

The content of ethylene oxide in the homo- and/or mixed-polyaddition compounds of ethylene oxide and/or propylene oxide is 0 to 100 %, preferably 0 to 30 %, particularly preferably 0 to 10 %.

In a particularly preferred embodiment of the present invention, the polyether polyol (A) is a homo-polyaddition product of propylene oxide with a molecular weight of from 1,000 to 2,500 Da and a functionality of from 1.90 to 2.05.

Further higher molecular weight polyhydroxyl components which are known per se from polyurethane chemistry, for example from the classes of polyester, polylactone or polycarbonate polyols, can optionally be used in a minor amount.

Organic compounds which have at least two free isocyanate groups per molecule are suitable as builder components (B). Diisocyanates Y(NCO)₂, wherein Y represents a divalent aliphatic hydrocarbon residue having 4 to 12 carbon atoms, a divalent cycloaliphatic hydrocarbon residue having 6 to 15 carbon atoms, a divalent aromatic hydrocarbon residue having 6 to 15 carbon atoms or a divalent araliphatic hydrocarbon residue having 7 to 15 carbon atoms, are preferably employed. The diisocyanates are particularly preferably chosen from the group consisting of tetramethylene-diisocyanate, methylpentamethylene-diisocyanate, hexamethylene-diisocyanate, dodecamethylene-diisocyanate, 1,4-diisocyanatocyclohexane, 1-isocyanato-3,3,5-trimethyl-5-isocyanatomethylcyclohexane, 4,4'-diisocyanatodicyclohexylm ethane, 4,4'-diisocyanato-2,2-dicyclohexylpropane, 1,4-diisocyanatobenzene, 2,4-diisocyanatotoluene, 2,6-diisocyanatotoluene, 4,4'-diisocyanatodiphenylmethane, 2,2'- and 2,4'-diisocyanatodiphenylmethane, p-xylylenediisocyanate and p-isopropylidene-diisocyanate and mixtures consisting of these compounds.

It is of course also possible for a proportion of the polyisocyanates of higher functionality known per se in polyurethane chemistry or also modified polyisocyanates known per se, for example containing carbodiimide groups, allophanate groups, isocyanurate groups, urethane groups and/or biuret groups, to be co-used.

Diisocyanates (B) are very particularly preferably chosen from the group consisting of hexamethylene-diisocyanate, 1,4-diisocyanatocyclohexane, 1-isocyanato-3,3,5-trimethyl-5-isocyanatomethylcyclohexane, 4,4'-diisocyanatodicyclohexylmethane and 4,4'-diisocyanato-2,2-dicyclohexylpropane, 2,4-diisocyanatotoluene, 2,6-diisocyanatotoluene and mixtures thereof.

In a particularly preferred embodiment of the present invention, the diisocyanate (B) consists of 2,4-diisocyanatotoluene, 2,6-diisocyanatotoluene or a mixture thereof.

Suitable components (C) containing sulphonate or carboxylate groups are for example diamino compounds or dihydroxy compounds which additionally carry sulphonate and/or carboxylate groups, such as, for example, the sodium, lithium, potassium and tertiary amine salts of N-(2-aminoethyl)-2-aminoethanesulphonic acid, of N-(3-aminopropyl)-2-aminoethanesulphonic acid, of N-(3-aminopropyl)-3-aminopropanesulphonic acid, of N-(2-aminoethyl)-3-aminopropanesulphonic acid, of the analogous carboxylic acids, of dimethylolpropionic acid, of dimethylolbutyric acid, or of the reaction products in the sense of a Michael addition of 1 mol of diamine, such as for example 1,2-ethanediamine or isophoronediamine, with 2 mol of acrylic acid or maleic acid.

Preferred components (C) are N-(2-aminoethyl)-2-aminoethanesulphonate or dimethylol propionate.

The acids can be employed directly in their salt form as sulphonate or carboxylate. However, it is also possible for a proportion or all of the neutralizing agent needed for the salt formation to be first added during or after the preparation of the polyurethanes.

Tertiary amines which are particularly suitable and preferred for the salt formation are for example triethylamine, dimethylcyclohexylamine and ethyldiisopropylamine.

Other amines can also be employed for the salt formation, such as for example ammonia, diethanolamine, triethanolamine, dimethylethanolamine, methyldiethanolamine, aminomethylpropanol and also mixtures of the amines mentioned and also of other amines. These amines are appropriately added only after the isocyanate groups have largely reacted.

It is also possible to employ other neutralizing agents for neutralization purposes, such as for example sodium, potassium, lithium or calcium hydroxide.

Suitable components (D) are mono-, di- or trifunctional amines and/or mono-, di- or trifunctional hydroxyamines, such as for example aliphatic and/or alicyclic primary and/or secondary monoamines, such as ethylamine, diethylamine, the isomeric propyl- and butylamines, higher linear aliphatic monoamines and cycloaliphatic monoamines, such as cyclohexylamine. Further examples are amino alcohols, i.e. compounds which contain amino and hydroxyl groups in one molecule, such as for example ethanolamine, N-methylethanolamine, diethanolamine, diisopropanolamine, 1,3-diamino-2-propanol, N-(2-hydroxyethyl)-ethylenediamine, N,N-bis(2-hydroxyethyl)-ethylenediamine and 2-propanolamine. Further examples are diamines and triamines, such as for example 1,2-ethanediamine, 1 , 6-hexamethylenediamine, 1-amino-3,3,5-trimethyl-5-aminomethylcyclohexane (isophoronediamine), piperazine, 1,4-diaminocyclohexane, bis-(4-aminocyclohexyl)-methane and diethylenetriamine. Adipic acid dihydrazide, hydrazine and hydrazine hydrate are furthermore possible. Mixtures of several of the compounds (D), optionally also together with those not mentioned, can of course also be employed.

Preferred components (D) are 1,2-ethanediamine, 1-amino-3,3,5-trimethyl-5-aminomethylcyclohexane, diethylenetriamine, diethanolamine, ethanolamine, N-(2-hydroxyethyl)-ethylenediamine and N,N-bis(2-hydroxyethyl)-ethylenediamine.

Components (D) serve as chain-lengthening agents preferably to build up higher molecular weights or as monofunctional compounds to limit molecular weights and/or optionally additionally to incorporate further reactive groups, such as for example free hydroxyl groups, as further crosslinking sites.

The polyurethane according to the invention contains component (D) in amounts of from 0 to 10, preferably from 0 to 5 and particularly preferably in amounts of from 0.25 to 4 % by weight.

Components (E) which are optionally to be co-used can be for example aliphatic, cycloaliphatic or aromatic monoalcohols having 2 to 22 C atoms, such as ethanol, butanol, hexanol, cyclohexanol, isobutanol, benzyl alcohol, stearyl alcohol, 2-ethylethanol and cyclohexanol; mono- or difunctional polyethers which are based on ethylene oxide polymers or ethylene oxide/propylene oxide copolymers started on alcohols or amines and have a hydrophilizing action, such as for example Polyether LB 25 (Bayer MaterialScience AG; Germany) or MPEG 750: methoxypolyethylene glycol, molecular weight 750 g/mol (for example Pluriol® 750, BASF AG, Germany); blocking agents which are usual for isocyanate groups and can be split off again at elevated temperatures, such as for example butanone oxime, dimethylpyrazole, caprolactam, malonates, triazole, dimethyltriazole, tert-butylbenzylamine and cyclopentanone carboxyethyl ester; and unsaturated compounds containing groups accessible for polymerization reactions, such as for example hydroxyethyl acrylate, hydroxyethyl methacrylate, hydroxybutyl acrylate, hydroxybutyl methacrylate, hydroxypropyl acrylate, hydroxypropyl methacrylate, pentaerythritol trisacrylate and hydroxyfunctional reaction products of monoepoxides, bisepoxides and/or polyepoxides with acrylic acid or methacrylic acid.

Further components (E) which are optionally to be co-used are low molecular weight diols, triols and/or tetraols, such as for example ethanediol, di-, tri- and tetraethylene glycol, 1,2-propanediol, di-, tri and tetrapropylene glycol, 1,3-propanediol, butane-1,4-diol, butane-1,3-diol, butane-2,3-diol, pentane-1,5-diol, hexane-1,6-diol, 2,2-dimethyl-1,3-propanediol, 1,4-dihydroxycyclohexane, 1,4-dimethylolcyclohexane, octane-1,8-diol, decane-1,10-diol, dodecane-1,12-diol, neopentyl glycol, 1,4-cyclohexanediol, 1,4-cyclohexane-dimethanol, 1,4-, 1,3- and 1,2-dihydroxybenzene or 2,2-bis-(4-hydroxyphenyl)-propane (bisphenol A), TCD-diol, trimethylolpropane, glycerol, pentaerythritol, dipentaerythritol or mixtures thereof, optionally with the co-use of further diols or triols which are not mentioned.

The polyurethane according to the invention can contain components (E) in amounts of from 0 to 20, preferably from 0 to 10 % by weight.

The anionically hydrophilized polyurethane or polyurethane-polyurea polymers (a) are preferably in the form of aqueous dispersions. The preparation of these aqueous polyurethane or polyurethane-urea dispersions can be carried out in one or more stages in a homogenous or, in the case of a multi-stage reaction, partially in a disperse phase. After the polyaddition has been completely or partially carried out, a dispersing, emulsifying or dissolving step is carried out. Thereafter, a further polyaddition or modification is optionally carried out in the disperse phase. All the processes known from the prior art can be used for the preparation, such as emulsifier-shearing force, acetone, prepolymer mixing, melt emulsification, ketimine and solid spontaneous dispersing processes or derivatives thereof. A summary of these methods is to be found in "Methoden der organischen Chemie" (Houben-Weyl, supplementary and follow-up volumes to the 4th edition, volume E20, H. Bartl and J. Falbe, Stuttgart, New York, Thieme 1987, p. 1671-1682). The melt emulsification, prepolymer mixing and acetone process are preferred. The acetone process is particularly preferred.

It is possible in principle to weigh out all the hydroxyl-functional components, then to add all the isocyanate-functional components and to react the mixture to form an isocyanate-functional polyurethane, which is then reacted with the amino-functional components. A reverse preparation, with initial introduction of the isocyanate component into the reaction vessel, addition of the hydroxyl-functional components, reaction to form the polyurethane and then reaction with the amino-functional components to form the end product, is also possible.

Conventionally, all or a portion of the hydroxyl-functional components (A), optionally (C) and optionally (E) for the preparation of a polyurethane prepolymer are initially introduced into the reactor and the mixture is optionally diluted with a solvent which is miscible with water but inert towards isocyanate groups and then homogenized. Component (B) is then metered in at room temperature to 120 °C and an isocyanate-functional polyurethane is prepared. This reaction can be carried out as a one-stage reaction and also as a multi-stage reaction. A multi-stage reaction can be carried out for example in a manner in which a component (A) is initially introduced into the reaction vessel and, after reaction with the isocyanate-functional component (B), a second component (C) or (E) is added, which can then react with a portion of the isocyanate groups still present.

Suitable solvents are for example acetone, methyl isobutyl ketone, butanone, tetrahydrofuran, dioxane, acetonitrile, dipropylene glycol dimethyl ether and 1-methyl-2-pyrrolidone, which can be added not only at the start of the preparation, but optionally also in portions at a later stage. Acetone and butanone are preferred. It is possible to carry out the reaction under normal pressure or increased pressure.

For the preparation of the prepolymer, the amounts of the hydroxyl- and optionally amino-functional components employed are such that an isocyanate characteristic number of from 1.05 to 2.5, preferably from 1.15 to 1.85 results.

The further reaction, the so-called chain lengthening, of the isocyanate-functional prepolymer with preferably amino-functional components (D), and optionally (C) and optionally (E) is carried out in a manner such that a degree of conversion with 25 to 150 %, preferably with 40 to 100 %, particularly preferably with 45 to 90 % of hydroxyl and/or amino groups, based on 100 % of isocyanate groups, is chosen.

At degrees of conversion of more than 100 %, which are possible but less preferred, it is appropriate first to react with the prepolymer all the components which are monofunctional in the sense of the isocyanate addition reaction and then to employ the di- or more than difunctional chain-lengthening components in order to obtain an as far as possible complete incorporation of all the chain-lengthening molecules.

The degree of conversion is conventionally monitored by observing the NCO content of the reaction mixture. For this, either spectroscopic measurements, for example infrared or near infrared spectra, measurements of the refractive index or chemical analyses, such as titrations of samples taken, can be carried out.

To accelerate the isocyanate addition reaction, conventional catalysts such as are known to a person skilled in the art for acceleration of the NCO-OH reaction can be employed. Examples are triethylamine, 1,4-diazabicyclo-[2,2,2]-octane, dibutyltin oxide, tin dioctoate or dibutyltin dilaurate, tin bis-(2-ethylhexanoate) or other organometallic compounds.

The chain lengthening of the isocyanate-functional prepolymers with component (D) and optionally (C) and optionally E) can be carried out before dispersion, during dispersion or after dispersion. The chain lengthening is preferably carried out before dispersion. If component (C) is employed as a chain-lengthening component, chain lengthening with this component is necessary before the dispersing step.

The chain lengthening is conventionally carried out at temperatures of from 10 to 100 °C, preferably from 25 to 60 °C.

The term chain lengthening in the context of the present invention also includes the reactions of optional monofunctional components (D) or also (E) which function as chain terminators as a result of their monofunctionality and therefore lead not to an increase but to a limitation of the molecular weight.

The chain lengthening components can be added to the reaction mixture in a form diluted with organic solvents and/or with water. The addition can be carried out in succession in any desired sequence or simultaneously by addition of a mixture.

The conversion of the sulfonic or carboxylic acids into sulfonates or carboxylates can be carried out before, during or after chain lengthening. It can moreover be carried out before or during dispersion.

For the purpose of preparation of the polyurethane dispersion, the prepolymer is either introduced into the dispersing water, optionally under high shearing forces, such as for example vigorous stirring, or, conversely, the dispersing water is stirred into the prepolymers. Chain lengthening can then be carried out, if this has not yet taken place in the homogeneous phase.

The organic solvent optionally employed, for example acetone, is distilled off during and/or after dispersion.

A preferred preparation process is that described in the following:
The OH-functional components (A), optionally (C) and optionally (E) and optionally solvent are initially introduced into the reaction vessel and heated up to 20 to 100 °C. Component (B) is metered in as rapidly as possible, while stirring. Utilizing the exothermicity, the reaction mixture is stirred at 40 to 150 °C until the isocyanate content reaches the theoretical value or is slightly below this. A catalyst can optionally be added at this stage. The mixture is subsequently diluted to solids contents of from 25 to 95 %, preferably from 30 to 80 % by weight by addition of solvent and chain lengthening is then carried out by addition of the amine-functional components, diluted with water and/or solvent, (D), optionally C), and/or optionally (E) at 30 to 120 °C. After a reaction time of 2 to 60 minutes, dispersion is carried out by addition of distilled water or by transferring the mixture into distilled water which has been previously introduced into the dispersing vessel, and some or all of the solvent employed is distilled off during or after the dispersing step. The neutralization of the free carboxylic acids and/or sulfonic acids which may be necessary can be carried out before chain lengthening, after chain lengthening or during chain lengthening.

All organic acids, such as for example mono-, di- or polycarboxylic acids, sulfonic acids, phospho acid esters or phosphonic acids, are possible in principle for the mixture (b) of an organic acid and an aminic base.

Preferably, the organic acids have a pKₐ value in the range from 1 to 7, particularly preferably in the range from 2 to 6, very particularly preferably in the range from 3 to 5.

Preferred acids are aliphatic monocarboxylic acids, such as for example formic acid, acetic acid, propionic acid, butyric acid, pentanoic acid, hexanoic acid, heptanoic acid, octanoic acid, nonanoic acid, decanoic acid, dodecanoic acid and higher homologues, and unsaturated monocarboxylic acids, such as oleic acid, linoleic acid and acrylic acid. Derivatives with, for example, OH or halide substituents are also possible, such as, for example, hydroxyacetic acid, lactic acid, malic acid, tartaric acid, citric acid, isocitric acid, mandelic acid, chloroacetic acid, dichloroacetic acid, trichloroacetic acid, fluoroacetic acid, difluoroacetic acid or trifluoroacetic acid. Aromatic acids, such as for example benzoic acid, salicylic acid, phthalic acid or nicotinic acid, are furthermore possible. Cyclic acids, such as for example cyclohexanecarboxylic acid, and dicarboxylic acids, such as for example ethanedioic acid, propanedioic acid, butanedioic acid, pentanedioic acid, hexanedioic acid, heptanedioic acid, octanedioic acid, nonanedioic acid, decanedioic acid, dodecanedioic acid or hexadecanedioic acid, can also be employed.

Particularly preferred acids are formic acid, acetic acid and lactic acid, and acetic acid is very particularly preferred.

All aminic bases are in principle possible for the mixture (b) of an organic acid and an aminic base, such as for example primary, secondary and tertiary amines. Alkanolamines are also possible.

Preferably, the aminic bases have a pK_{b} value in the range from 1 to 10, particularly preferably in the range from 2 to 7, very particularly preferably in the range from 3 to 6.

They are preferably tertiary amines, such as for example triethylamine, tributylamine, tripropylamine, triisopropylamine, ethyldiisopropylamine, dimethylbenzylamine, dimethylcyclohexylamine, dimethylaminopropylamine, 1,3-bisdimethylaminobutane, bis-(2-dimethylaminoethyl) ether, N-ethylmorpholine, N-methylmorpholine, N-cyclohexylmorpholine, 2-dimethylaminoethoxyethanol, dimethylethanolamine, methyldiethanolamine, t r iethanolamine, N-methylimidazole, N-dimethylaminoethylmorpholine, dimethylpiperazine or mixtures.

Triethylamine, triisopropylamine, ethyldiisopropylamine, dimethylethanolamine, methyldiethanolamine and triethanolamine are particularly preferred, and triethylamine is very particularly preferred.

In a very particularly preferred embodiment, the mixture (b) comprises acetic acid and triethylamine.

In an alternative embodiment, instead of the mixture (b), a compound which simultaneously contains acid and aminic base functions can be employed as the additive. Examples of this are glycine, alanine, valine and N,N-bis(2-hydroxyethyl)glycine.

The mixture (b) of an organic acid and an aminic base can be added as an additive subsequently to the aqueous dispersion of the anionically hydrophilized polyurethane or polyurethane-polyurea polymer based on polyether polyols. It is preferably added in a form diluted with water. However, it is also possible to add the mixture during the preparation of the aqueous dispersion of the anionically hydrophilized polyurethane or polyurethane-polyurea polymer, before or during dispersion.

In a particularly preferred embodiment, the mixture (b) is dissolved in the dispersing water and added during dispersion.

In the context of the present invention, the statement that the mixture is added as an additive means that the organic acid and the aminic base are not added individually and at different points in time, but that these are first mixed and the resulting mixture is then added. The acid is thereby buffered and formation of coagulate is largely suppressed.

The mixture of an organic acid and an aminic base as an additive leads not only to more stable dispersions after storage at low temperatures, but often also to dispersions of reduced viscosity, which makes possible the preparation of dispersions of higher solids content at a given viscosity.

Further additives and auxiliary substances (d) which are optionally contained in the compositions and which can be employed are, for example, the binders, auxiliary substances and additives known in coatings and adhesives technology, in particular emulsifiers or light stabilizers, such as UV absorbers or sterically hindered amines (HALS), furthermore antioxidants, fillers or auxiliary substances, for example antisettling agents, defoaming and/or wetting agents, flow agents, reactive diluents, plasticizers, catalysts, auxiliary solvents and/or thickeners and additives, such as, for example, pigments, dyes or matting agents. Tackifying resins ("tackifiers") can also be added. Tackifying resins are to be understood as meaning all natural or synthetic resins or polymers which as additives increase the tack, that is to say the property of adhering firmly to surfaces after being briefly pressed gently thereon. In order to achieve this, adhesive resins must have, inter alia, an adequate compatibility with the polymers. Tackifiers themselves do not need to have tack. Tackifiers which are widely employed are, inter alia, terpene oligomers, aliphatic petrochemical resins and colophony resins.

The components (d) optionally contained in the compositions can be added to the compositions according to the invention directly before processing. However, it is also possible to add at least a portion of the additives before, during or after dispersion of the binder.

The choice and the metering of these substances, which can be added to the individual components and/or the overall mixture, are known in principle to a person skilled in the art and can be adapted to the specific use by simple preliminary experiments without unduly high expense.

The present invention likewise provides two-component (2C) adhesive compositions comprising the dispersions according to the invention and at least one polyisocyanate compound with at least two isocyanate groups per molecule. In this context, the polyisocyanate is added before use (2C processing). Polyisocyanate compounds which can be emulsified in water are preferably employed in this case. These are for example the compounds described in EP-A 0 206 059, DE-A 31 12 117 or DE-A 100 24 624. The polyisocyanate compounds are employed in an amount of from 0.1 to 20 % by weight, preferably 0.5 to 10 % by weight, particularly preferably 1.5 to 6 % by weight, based on the aqueous dispersion.

In particular, adhesive compositions which are suitable for the production of adhesive composites, the adhesive composite comprising a substrate, the dispersion according to the invention and a flat structure, are prepared with the dispersions according to the invention. In this context, the substrate and flat structure can be made of the same or different materials.

The dispersions according to the invention are distinguished by excellent adhesion to the most diverse substrates and flat structures, such as, for example, to wood, paper, leather, textiles, cork, plastic materials, such as various grades of polyvinyl chloride, polyurethanes, polyvinyl acetate, polylactides, rubbers and polyethylvinyl acetate, glass fibers, glass fiber, carbon fiber and mineral fiber woven fabrics and knitted fabrics and to mineral materials, such as rocks, concrete, gypsum or plasters, and to metals, such as for example aluminum.

The adhesive compositions comprising the dispersions according to the invention are therefore suitable for adhesively bonding any desired substrates and flat structures, preferably of the abovementioned materials.

The adhesives according to the invention are particularly suitable for adhesively bonding and laminating films, for example for the production of packaging films and composite films.

The polyurethane dispersions according to the invention can also be used for the preparation of sealants.

The present application likewise provides adhesive composites comprising substrates and flat structures adhesively bonded with the polyurethane or polyurethane-urea dispersions according to the invention.

The adhesives according to the invention are processed by the known methods of adhesives technology with respect to the processing of aqueous dispersion adhesives.

### Examples

The invention is explained in more detail in the following with the aid of the examples.

The measurement of the viscosities was carried out by the following method:

For the measurement of the irreversible increase in viscosity during storage at low temperatures, the dispersion sample (approx. 200 g) is divided. One half a) is stored at 23 °C and the other half b) is stored in a refrigerator temperature-controlled at 5 °C - 6 °C for 24 h. After storage at a low temperature, sample b) is conditioned at 23 °C for a further 24 h.

Samples a) and b) are then analyzed with the MCR301 rheometer from Anton Paar. The CC27 beaker/rotor system with the Peltier heating system C-PTD200 is used. The viscosities [Pa*s] of the dispersion samples a) and b) are determined isothermally at 23 °C over the shear rate D = 0.1 s⁻¹ to 1,000 s⁻¹.

However, aqueous polyurethane and polyurethane-polyurea dispersions based on polyether polyols often have the disadvantage that after prior storage at low temperatures at temperatures of between 0 °C and 10 °C, their viscosity at room temperature increases drastically compared with the starting viscosity (likewise at room temperature). Since the flow properties and the processing parameters thereby change to the extent that the dispersions may become unusable, these dispersions must always be stored and transported at temperatures of > 10 °C, which involves great expense and therefore considerable costs.

The change in flow properties and processing parameters after storage at low temperatures is acceptable from the use point of view if the difference between the viscosities of samples a) and b) measured at the shear rate D = 0.1 S⁻¹ is not greater than the factor 10, preferably not greater than the factor 8. These dispersions have adequate stability at low temperatures.

Alternatively, the measurement of the increase in viscosity after storage at low temperatures can also be carried out with a VT-500 rotary viscometer from Haake at a temperature of 23 °C and a shear rate of 1 s⁻¹ in accordance with DIN 53019.

### Example 1:

An equimolar mixture (1 mol each of acetic acid and triethanolamine per kg of solution) was prepared from 790.7 g of water, 60.1 g of acetic acid (pure) and 149.2 g of triethanolamine (pure). The weight contents were 6.01 % by weight of acetic acid and 14.92 % by weight of triethanolamine, therefore 20.93 % by weight of additive in total.

### Example 2 (comparison):

380.2 g of a polypropylene oxide diol (OH number 56, average molecular weight 2,000 g/mol) were dewatered at 90 °C under 50 mbar for 60 min. 10.8 g of dimethylolpropionic acid were then added and the mixture was homogenized at 90 °C for 15 min. After cooling to 70 °C, 69.75 g of an 80:20 mixture of 2,4- and 2,6-toluylene-diisocyanate were stirred in, and after 15 min the temperature was kept constant at 90 °C. After 3 h, an isocyanate content of 2.30 % was reached. The mixture was diluted with 690 g of acetone and neutralized with 6.11 g of triethylamine - dissolved in 33 g of acetone - at 48 °C, while stirring, for 10 min. 3.93 g of ethylenediamine - dissolved in 41 g of water - were then added at 48 °C, while stirring, in the course of 15 minutes and the mixture was stirred for a further 30 minutes. 660 g of water were then added to the prepolymer mixture in acetone, with vigorous stirring, and dispersing was carried out at 48 °C for 20 minutes. After removal of the acetone by distillation, an aqueous dispersion with a solids content of 41.8 % was obtained, and was adjusted to a solids content of 40.0 % by dilution with water.
A = viscosity before storage at a low temperature: 150 mPas
B = viscosity after storage at a low temperature: 2,700 mPas
Factor B/A = 18

### Example 3 (according to the invention):

380.2 g of a polypropylene oxide diol (OH number 56, average molecular weight 2,000 g/mol) were dewatered at 90 °C under 50 mbar for 60 min. 10.8 g of dimethylolpropionic acid were then added and the mixture was homogenized at 90 °C for 15 min. After cooling to 70 °C, 69.75 g of an 80:20 mixture of 2,4- and 2,6-toluylene-diisocyanate were stirred in, and after 15 min the temperature was kept constant at 90 °C.

After 3 h, an isocyanate content of 2.30 % was reached. The mixture was diluted with 690 g of acetone and neutralized with 6.11 g of triethylamine - dissolved in 33 g of acetone - at 48 °C, while stirring, for 10 min. 3.93 g of ethylenediamine - dissolved in 41 g of water - were then added at 48 °C, while stirring, in the course of 15 minutes and the mixture was stirred for a further 30 minutes. 660 g of water were then added to the prepolymer mixture in acetone, with vigorous stirring, and dispersing was carried out at 48 °C for 20 minutes. After removal of the acetone by distillation, an aqueous dispersion with a solids content of 41.8 % was obtained.

0.10 g of the mixture from Example 1, diluted with 4.21 g of water, was added dropwise to 95.69 g of this dispersion in the course of 5 minutes, with vigorous stirring. A dispersion with a solids content of 40.0 % and an additive content of 0.02 % was obtained.
A = viscosity before storage at a low temperature: 150 mPas
B = viscosity after storage at a low temperature: 300 mPas
Factor B/A = 2

### Example 4 (according to the invention):

380.2 g of a polypropylene oxide diol (OH number 56, average molecular weight 2,000 g/mol) were dewatered at 90 °C under 50 mbar for 60 min. 10.8 g of dimethylolpropionic acid were then added and the mixture was homogenized at 90 °C for 15 min. After cooling to 70 °C, 69.75 g of an 80:20 mixture of 2,4- and 2,6-toluylene-diisocyanate were stirred in, and after 15 min the temperature was kept constant at 90 °C. After 3 h, an isocyanate content of 2.30 % was reached. The mixture was diluted with 690 g of acetone and neutralized with 6.11 g of triethylamine - dissolved in 33 g of acetone - at 48 °C, while stirring, for 10 min. 3.93 g of ethylenediamine - dissolved in 41 g of water - were then added at 48 °C, while stirring, in the course of 15 minutes and the mixture was stirred for a further 30 minutes. 660 g of water were then added to the prepolymer mixture in acetone, with vigorous stirring, and dispersing was carried out at 48 °C for 20 minutes. After removal of the acetone by distillation, an aqueous dispersion with a solids content of 41.8 % was obtained.

0.25 g of the mixture from Example 1, diluted with 4.06 g of water, was added dropwise to 95.69 g of this dispersion in the course of 5 minutes, with vigorous stirring. A dispersion with a solids content of 40.0 % and an additive content of 0.05 % was obtained.
A = viscosity before storage at a low temperature: 100 mPas
B = viscosity after storage at a low temperature: 150 mPas
Factor B/A = 1.5

### Example 5 (according to the invention):

380.2 g of a polypropylene oxide diol (OH number 56, average molecular weight 2,000 g/mol) were dewatered at 90 °C under 50 mbar for 60 min. 10.8 g of dimethylolpropionic acid were then added and the mixture was homogenized at 90 °C for 15 min. After cooling to 70 °C, 69.75 g of an 80:20 mixture of 2,4- and 2,6-toluylene-diisocyanate were stirred in, and after 15 min the temperature was kept constant at 90 °C. After 3 h, an isocyanate content of 2.30 % was reached. The mixture was diluted with 690 g of acetone and neutralized with 6.11 g of triethylamine - dissolved in 33 g of acetone - at 48 °C, while stirring, for 10 min. 3.93 g of ethylenediamine - dissolved in 41 g of water - were then added at 48 °C, while stirring, in the course of 15 minutes and the mixture was stirred for a further 30 minutes. 660 g of water were then added to the prepolymer mixture in acetone, with vigorous stirring, and dispersing was carried out at 48 °C for 20 minutes. After removal of the acetone by distillation, an aqueous dispersion with a solids content of 41.8 % was obtained.

0.50 g of the mixture from Example 1, diluted with 3.81 g of water, was added dropwise to 95.69 g of this dispersion in the course of 5 minutes, with vigorous stirring. A dispersion with a solids content of 40.1 % and an additive content of 0.10 % was obtained.
A = viscosity before storage at a low temperature: 30 mPas
B = viscosity after storage at a low temperature: 40 mPas
Factor B/A = 1.3

### Example 6 (according to the invention):

380.2 g of a polypropylene oxide diol (OH number 56, average molecular weight 2,000 g/mol) were dewatered at 90 °C under 50 mbar for 60 min. 10.8 g of dimethylolpropionic acid were then added and the mixture was homogenized at 90 °C for 15 min. After cooling to 70 °C, 69.75 g of an 80:20 mixture of 2,4- and 2,6-toluylene-diisocyanate were stirred in, and after 15 min the temperature was kept constant at 90 °C. After 3 h, an isocyanate content of 2.30 % was reached. The mixture was diluted with 690 g of acetone and neutralized with 6.11 g of triethylamine - dissolved in 33 g of acetone - at 48 °C, while stirring, for 10 min. 3.93 g of ethylenediamine - dissolved in 41 g of water - were then added at 48 °C, while stirring, in the course of 15 minutes and the mixture was stirred for a further 30 minutes. 660 g of water were then added to the prepolymer mixture in acetone, with vigorous stirring, and dispersing was carried out at 48 °C for 20 minutes. After removal of the acetone by distillation, an aqueous dispersion with a solids content of 41.8 % was obtained.

1.00 g of the mixture from Example 1, diluted with 3.31 g of water, was added dropwise to 95.69 g of this dispersion in the course of 5 minutes, with vigorous stirring. A dispersion with a solids content of 40.2 % and an additive content of 0.2 % was obtained.
A = viscosity before storage at a low temperature: 15 mPas
B = viscosity after storage at a low temperature: 20 mPas
Factor B/A = 1.3

### Example 7:

An equimolar mixture (1 mol each of acetic acid and triethylamine per kg of solution) was prepared from 838.8 g of water, 60.1 g of acetic acid (pure) and 101.2 g of triethylamine (pure). The weight contents were 6.01 % by weight of acetic acid and 10.12 % by weight of triethylamine, therefore 16.13 % by weight of additive in total.

### Example 8 (according to the invention):

380.2 g of a polypropylene oxide diol (OH number 56, average molecular weight 2,000 g/mol) were dewatered at 90 °C under 50 mbar for 60 min. 10.8 g of dimethylolpropionic acid were then added and the mixture was homogenized at 90 °C for 15 min. After cooling to 70 °C, 69.75 g of an 80:20 mixture of 2,4- and 2,6-toluylene-diisocyanate were stirred in, and after 15 min the temperature was kept constant at 90 °C. After 3 h, an isocyanate content of 2.30 % was reached. The mixture was diluted with 690 g of acetone and neutralized with 6.11 g of triethylamine - dissolved in 33 g of acetone - at 48 °C, while stirring, for 10 min. 3.93 g of ethylenediamine - dissolved in 41 g of water - were then added at 48 °C, while stirring, in the course of 15 minutes and the mixture was stirred for a further 30 minutes. 660 g of water were then added to the prepolymer mixture in acetone, with vigorous stirring, and dispersing was carried out at 48 °C for 20 minutes. After removal of the acetone by distillation, an aqueous dispersion with a solids content of 41.8 % was obtained.

0.34 g of the mixture from Example 7, diluted with 3.97 g of water, was added dropwise to 95.69 g of this dispersion in the course of 5 minutes, with vigorous stirring. A dispersion with a solids content of 40.1 % and an additive content of 0.05 % was obtained.
A = viscosity before storage at a low temperature: 130 mPas
B = viscosity after storage at a low temperature: 1,030 mPas
Factor B/A = 8

### Example 9 (according to the invention):

380.2 g of a polypropylene oxide diol (OH number 56, average molecular weight 2,000 g/mol) were dewatered at 90 °C under 50 mbar for 60 min. 10.8 g of dimethylolpropionic acid were then added and the mixture was homogenized at 90 °C for 15 min. After cooling to 70 °C, 69.75 g of an 80:20 mixture of 2,4- and 2,6-toluylene-diisocyanate were stirred in, and after 15 min the temperature was kept constant at 90 °C. After 3 h, an isocyanate content of 2.32 % was reached. The mixture was diluted with 690 g of acetone and neutralized with 6.11 g of triethylamine - dissolved in 33 g of acetone - at 48 °C, while stirring, for 10 min. 3.93 g of ethylenediamine - dissolved in 41 g of water - were then added at 48 °C, while stirring, in the course of 15 minutes and the mixture was stirred for a further 30 minutes. Thereafter, 4.0 g of the mixture from Example 7, diluted with 40 g of water, were added dropwise in the course of 10 minutes, with vigorous stirring. 620 g of water were then added to the prepolymer mixture in acetone, with vigorous stirring, and dispersing was carried out at 48 °C for 20 minutes. After removal of the acetone by distillation, an aqueous dispersion with a solids content of 41.6 % was obtained, and was adjusted to a solids content of 40.0 % by dilution with water. The additive content was 0.05 %.
A = viscosity before storage at a low temperature: 180 mPas
B = viscosity after storage at a low temperature: 1,080 mPas
Factor B/A = 6

### Example 10 (according to the invention):

380.2 g of a polypropylene oxide diol (OH number 56, average molecular weight 2,000 g/mol) were dewatered at 90 °C under 50 mbar for 60 min. 10.8 g of dimethylolpropionic acid were then added and the mixture was homogenized at 90 °C for 15 min. After cooling to 70 °C, 69.75 g of an 80:20 mixture of 2,4- and 2,6-toluylene-diisocyanate were stirred in, and after 15 min the temperature was kept constant at 90 °C. After 3 h, an isocyanate content of 2.32 % was reached. The mixture was diluted with 690 g of acetone and neutralized with 6.11 g of triethylamine - dissolved in 33 g of acetone - at 48 °C, while stirring, for 10 min. 3.93 g of ethylenediamine - dissolved in 41 g of water - were then added at 48 °C, while stirring, in the course of 15 minutes and the mixture was stirred for a further 30 minutes. 616 g of water, in which 4 g of the mixture from Example 7 were dissolved, were then added to the prepolymer mixture in acetone, with vigorous stirring, and dispersing was carried out at 48 °C for 20 minutes. After removal of the acetone by distillation, an aqueous dispersion with a solids content of 41.7 % was obtained, and was adjusted to a solids content of 40.0 % by dilution with water. The additive content was 0.05 %.
A = viscosity before storage at a low temperature: 100 mPas
B = viscosity after storage at a low temperature: 400 mPas
Factor B/A = 4

### Example 11 (according to the invention):

380.2 g of a polypropylene oxide diol (OH number 56, average molecular weight 2,000 g/mol) were dewatered at 90 °C under 50 mbar for 60 min. 10.8 g of dimethylolpropionic acid were then added and the mixture was homogenized at 90 °C for 15 min. After cooling to 70 °C, 69.75 g of an 80:20 mixture of 2,4- and 2,6-toluylene-diisocyanate were stirred in, and after 15 min the temperature was kept constant at 90 °C. After 3 h, an isocyanate content of 2.30 % was reached. The mixture was diluted with 690 g of acetone and neutralized with 6.11 g of triethylamine - dissolved in 33 g of acetone - at 48 °C, while stirring, for 10 min. 3.93 g of ethylenediamine - dissolved in 41 g of water - were then added at 48 °C, while stirring, in the course of 15 minutes and the mixture was stirred for a further 30 minutes. 660 g of water were then added to the prepolymer mixture in acetone, with vigorous stirring, and dispersing was carried out at 48 °C for 20 minutes. After removal of the acetone by distillation, an aqueous dispersion with a solids content of 41.8 % was obtained.

1.00 g of glycine, dissolved in 5.0 g of water, was added dropwise to 95.69 g of this dispersion in the course of 5 minutes, with vigorous stirring. A dispersion with a solids content of 40.3 % and an additive content of 0.98 % was obtained.
A = viscosity before storage at a low temperature: 80 mPas
B = viscosity after storage at a low temperature: 170 mPas
Factor B/A = 2

### Example 12 (comparison):

240 g (239.5 mmol) of a polypropylene oxide diol (OH number 112, average molecular weight 1,000 g/mol) and 25.7 g (191.6 mmol) of dimethylolpropionic acid are dewatered at 100 °C under 50 mbar for 60 min. 5.7 g of hexane-1,6-diol (48.2 mmol) are then added and the mixture is homogenized at 100 °C for 15 min. After cooling to 70 °C, 121.7 g (699.4 mmol) of an 80:20 mixture of 2,4- and 2,6-toluylene-diisocyanate are stirred in, and after 15 min the temperature is kept constant at 90 °C. After 3 h, an isocyanate content of 4.60 % is reached. The mixture is diluted with 69 g of acetone and salt formation is carried out with 12.6 g (124.5 mmol) of triethylamine at 50 °C for 10 min. The prepolymer mixture is then added to 750 g of water, with vigorous stirring, and dispersing is carried out at 40 °C for one hour. After removal of the acetone by distillation, a fine dispersion with a solids content of 36.5 % is obtained, and is adjusted to a solids content of 35.0 % by dilution with water.
A = viscosity before storage at a low temperature: 110 mPas
B = viscosity after storage at a low temperature: 2,750 mPas
Factor B/A = 25

### Example 13 (according to the invention):

240 g (239.5 mmol) of a polypropylene oxide diol (OH number 112, average molecular weight 1,000 g/mol) and 25.7 g (191.6 mmol) of dimethylolpropionic acid are dewatered at 100 °C under 50 mbar for 60 min. 5.7 g of hexane-1,6-diol (48.2 mmol) are then added and the mixture is homogenized at 100 °C for 15 min. After cooling to 70 °C, 121.7 g (699.4 mmol) of an 80:20 mixture of 2,4- and 2,6-toluylene-diisocyanate are stirred in, and after 15 min the temperature is kept constant at 90 °C. After 3 h, an isocyanate content of 4.60 % is reached. The mixture is diluted with 69 g of acetone and salt formation is carried out with 12.6 g (124.5 mmol) of triethylamine at 50 °C for 10 min. The prepolymer mixture is then added to 740 g of water, with vigorous stirring, and dispersing is carried out at 40 °C for one hour. After removal of the acetone by distillation, a finely divided dispersion with a solids content of 36.5 % is obtained.

0.50 g of the mixture from Example 1, diluted with 3.61 g of water, was added dropwise to 95.89 g of this dispersion in the course of 5 minutes, with vigorous stirring. A dispersion with a solids content of 35.1 % and an additive content of 0.1 % was obtained.
A = viscosity before storage at a low temperature: 40 mPas
B = viscosity after storage at a low temperature: 160 mPas
Factor B/A = 4

## Claims

1. Aqueous compositions comprising
(a) at least one anionically hydrophilized polyurethane or polyurethane-polyurea polymer based on polyether polyols,
(b) at least one mixture of an organic acid and an aminic base as an additive, **characterized in that** the molar ratio of the amounts of organic acid : aminic base is between 9 : 1 and 1 : 9,
(c) water and
(d) optionally further additives and auxiliary substances.

2. Aqueous composition according to claim 1, wherein the amount of (a) is from 20 to 60 parts by weight, the amount of (b) is from 0.001 to 20 parts by weight, the amount of (c) is from 30 to 75 parts by weight and the amount of (d) is from 0 to 40 parts by weight, with the proviso that the sum of the parts by weight of the individual components (a) to (d) is 100.

3. Aqueous composition according to claim 1, wherein component (a) comprises as builder components
(A) at least one polyether polyol
(B) at least one di- and/or polyisocyanate component
(C) at least one component which contains sulphonate and/or carboxylate groups and which furthermore has two or three isocyanate-reactive hydroxy and/or amino groups and thus leads to lateral sulphonate or, respectively, carboxylate structural units,
(D) optionally mono-, di- and/or triamino-functional compounds and
(E) optionally other isocyanate-reactive compounds.

4. Aqueous composition according to claim 1, wherein the organic acid has a pKₐ value in the range from 1 to 7.

5. Aqueous composition according to claim 1, wherein the aminic base has a pK_{b} value in the range from 1 to 10.

6. Aqueous composition according to claim 1, wherein the molar ratio of amounts of organic acid : aminic base is between 3:2 and 2:3.

7. Aqueous composition according to claim 1, wherein the organic acid has a pKₐ value in the range from 3 to 5 and the aminic base has a pK_{b} value in the range from 3 to 6.

8. Aqueous composition according to claim 1, wherein the organic acid is chosen from the group consisting of formic acid, acetic acid, propionic acid, butyric acid, pentanoic acid, hexanoic acid, heptanoic acid, octanoic acid, nonanoic acid, decanoic acid, dodecanoic acid and higher homologues, unsaturated monocarboxylic acids, such as oleic acid, linoleic acid and acrylic acid, hydroxyacetic acid, lactic acid, malic acid, tartaric acid, citric acid, isocitric acid, mandelic acid, chloroacetic acid, dichloroacetic acid, trichloroacetic acid, fluoroacetic acid, difluoroacetic acid, trifluoroacetic acid, benzoic acid, salicylic acid, phthalic acid, nicotinic acid, cyclohexanecarboxylic acid, ethanedioic acid, propanedioic acid, butanedioic acid, pentanedioic acid, hexanedioic acid, heptanedioic acid, octanedioic acid, nonanedioic acid, decanedioic acid, dodecanedioic acid and hexadecanedioic acid.

9. Aqueous composition according to claim 1, wherein the aminic base is chosen from the group consisting of triethylamine, tributylamine, tripropylamine, triisopropylamine, ethyldiisopropylamine, dimethylbenzylamine, dimethylcyclohexylamine, dimethylaminopropylamine, 1,3-bisdimethylaminobutane, bis-(2-dimethylaminoethyl) ether, N-ethylmorpholine, N-methylmorpholine, N-cyclohexylmorpholine, 2-dimethylaminoethoxyethanol, dimethylethanolamine, methyldiethanolamine, triethanolamine, N-methylimidazole, N-dimethylaminoethylmorpholine and dimethylpiperazine.

10. Adhesive compositions comprising at least one aqueous composition according to one or more of claims 1 to 9.

11. Use of an adhesive composition according to claim 10 for adhesively bonding materials chosen from the group consisting of wood, paper, leather, textiles, cork, plastic materials, such as various grades of polyvinyl chloride, polyurethanes, polyvinyl acetate, polylactides, rubbers and polyethylvinyl acetate, glass fibers, glass fiber, carbon fiber and mineral fiber woven fabrics and knitted fabrics, mineral materials and metals.

12. Adhesive composites comprising at least one adhesive composition according to claim 10.
